## Europäisches Patentamt
## European Patent Office
## Office européen des brevets

(19)

(11) Veröffentlichungsnummer : **0 189 109**
**B1**

(12)

# EUROPÄISCHE PATENTSCHRIFT

(45) Veröffentlichungstag der Patentschrift :
**13.04.88**

(51) Int. Cl.⁴ : **F 16 D 63/00, F 16 D 27/00**

(21) Anmeldenummer : **86100470.3**

(22) Anmeldetag : **15.01.86**

(54) **Reibungsbremse oder -kupplung.**

(30) Priorität : **19.01.85 DE 3501680**

(43) Veröffentlichungstag der Anmeldung :
**30.07.86 Patentblatt 86/31**

(45) Bekanntmachung des Hinweises auf die Patenterteilung : **13.04.88 Patentblatt 88/15**

(84) Benannte Vertragsstaaten :
**CH DE FR GB IT LI SE**

(56) Entgegenhaltungen :
**DE-A- 1 475 517**
**DE-A- 2 638 944**
**DE-B- 1 233 673**

(73) Patentinhaber : **Robert Scheuffele GmbH & Co. KG**
**Keplerstrasse 12-14**
**D-7120 Bietigheim-Bissingen (DE)**

(72) Erfinder : **Krome, Walter**
**Bellscheider Weg 30**
**D-4030 Ratingen 6 (DE)**

(74) Vertreter : **Patentanwälte Kohler - Schwindling -**
**Späth**
**Hohentwielstrasse 41**
**D-7000 Stuttgart 1 (DE)**

Jouve, 18, rue St-Denis, 75001 Paris, France

## Beschreibung

Die Erfindung bezieht sich auf eine einen Elektromagneten und einen Dauermagneten enthaltende magnetisch betätigte Reibungsbremse oder Reibungskupplung mit einem geteilten ferromagnetischen Magnetgehäuse, das einen inneren und einen von ihm durch einen eine Übergangsstelle des elektromagnetischen Flusses definierenden Spalt magnetisch getrennten äußeren Polring aufweist. Zwischen den Polringen ist eine ringförmige Magnetspule angeordnet und mit ihnen ist je ein Pol des axial magnetisierten Dauermagneten magnetisch leitend verbunden.

Bei der durch die DE-B-1 233 673 bekannt gewordenen Anordnung sind der Dauermagnet und die Magnetspule im Magnetgehäuse axial hintereinander angeordnet, der elektromagnetische Fluß verläuft bis auf unwesentliche Streuflüsse in einem Gehäuseteil, der zwischen dem Dauermagneten und der Magnetspule vorgesehen ist. Um dem elektromagnetischen Fluß einen möglichst geringen magnetischen Widerstand entgegenzusetzen, der außer durch den Arbeitsspalt zwischen der Ankerplatte und dem Magnetgehäuse im wesentlichen durch den vorerwähnten Spalt zwischen den beiden Polringen bestimmt ist, muß dieser zwischen dem Dauermagneten und der Magnetspule vorgesehene Gehäuseteil einen verhältnismäßig großen Flußquerschnitt aufweisen, muß also auch in axialer Richtung eine verhältnismäßig große Ausdehnung besitzen. Dadurch wird bei der bekannten Anordnung die axiale Baulänge verhältnismäßig groß, was für viele Anwendungszwecke nicht optimal ist.

Der Erfindung liegt die Aufgabe zugrunde, eine Reibungsbremse oder -kupplung zu schaffen, die eine geringere axiale Baulänge hat, dabei aber trotzdem eine gute Wärmeableitung bietet und bei gleichen Flanschabmessungen ein höheres Drehmoment erreicht.

Diese Aufgabe wird erfindungsgemäß dadurch gelöst, daß bei der gattungsgemäßen Anordnung in dem Weg des elektromagnetischen Flusses durch das Magnetgehäuse hindurch mindestens zwei in voneinander örtlich verschiedene magnetisch parallele Flußpfade eingeschaltete Spalte zwischen den Polringen vorgesehen sind.

Diese erfindungsgemäße Ausbildung einer Reibungsbremse oder -kupplung hat zunächst den Vorteil, daß die axiale Baulänge der Anordnung kürzer wird, weil die beiden Strompfade so gelegt werden können, daß nicht der ganze Fluß ein zwischen dem Dauermagneten und der Magnetspule gelegenes ferromagnetisches Teil durchfließt, sondern ein Strompfad für diesen elektromagnetischen Fluß an anderer Stelle verläuft. Der Querschnitt dieses zwischen dem Dauermagneten und der Magnetspule befindlichen ferromagnetischen Gehäuseteils muß daher, sofern er zur Leitung des elektromagnetischen Flusses herangezogen wird, nur einen Teilfluß aufnehmen, sein Flußquerschnitt kann daher entsprechend kleiner sein, womit sich die axiale Baulänge der ganzen Anordnung verringert. Ein weiterer Vorteil der Erfindung liegt darin, daß in den Fällen, in denen der Querschnitt des zwischen dem Dauermagneten und der Magnetspule verlaufenden Gehäuseteils nicht verringert zu werden braucht, weil die Baulänge der Anordnung nicht verringert werden muß, durch den zweiten Flußpfad der Gesamtquerschnitt des Eisenweges vergrößert und damit der magnetische Widerstand verringert wird, wodurch bei gleicher Stromleistung eine größere Magnetkraft erzeugt wird oder aber führt die Verringerung des magnetischen Widerstandes zu einer Verringerung der Magnetwicklung und damit zu einer Kupferersparnis. Auch ermöglicht die Verteilung des elektromagnetischen Flusses in zwei zueinander parallel geschaltete Flußpfade eine wirkungsvollere Verdrängung des permanentmagnetischen Feldes bei Erregung der Magnetwicklung und damit einen größeren Lüftbereich in Abhängigkeit von der Betriebsspannung. Die erfindungsgemäße Anordnung macht es auch möglich, den optimalen Verdrängungspunkt des permanentmagnetischen Feldes durch das elektromagnetische Feld für den praktischen Betrieb ohne Zuhilfenahme eines Vorwiderstandes zu ermitteln und einzustellen. Bei bekannten Systemen mussten, um auf einen solchen Leistung verzehrenden Vorwiderstand verzichten zu können, ein zusätzlicher Aufwand in der Herstellung getrieben werden, es mussten nämlich die mechanischen und magnetischen Toleranzen kompensierende Maßnahmen getroffen werden, was wiederum Nachteile zur Folge hatte.

Ein weiterer Vorteil der Erfindung liegt darin, daß das magnetische Streufeld geringer ist, so daß ferromagnetische Anbauteile den Fluß im Magnetgehäuse weniger beeinflussen. Schließlich kann die den Anker abhebende Feder verhältnismäßig schwach sein, so daß ein großer Hub (Lüftungsspalt plus Verschleißreserve) gewährleistet ist. Eine durch die Erfindung ermöglichte kleinere Wicklung bedeutet auch eine geringere Induktivität, was für die Auslegung der Schalter vorteilhaft ist und auch kürzere Schaltzeiten möglich macht.

Durch den erfindungsgemäßen zweiten Flußpfad werden daher eine Reihe von Vorteilen nicht nur für die Herstellung, sondern auch für die praktische Verwendung erzielt. Dabei ist gewährleistet, daß der dauermagnetische Fluß nach wie vor durch einen ununterbrochenen Eisenweg zu den der Ankerscheibe zugewandten Polen des Magnetgehäuses geführt wird, dieser dauermagnetische Fluß daher nicht über den ersten gattungsgemäß bekannten Spalt und auch nicht über den erfindungsgemäß vorgesehenen zweiten Spalt geführt ist.

Die Erfindung kann bei verschiedenen Ausführungsformen der Erfindung verwirklicht sein. Bei der gattungsgemäßen Ausführungsform, bei der ein Polring einen sich radial erstreckenden Steg aufweist, der durch einen im Weg des elektromagnetischen Flusses liegenden Spalt von dem anderen Polring getrennt ist, kann die Erfindung beispielsweise dadurch verwirklicht sein, daß der Steg einen axial verlaufenden Schenkel aufweist, der durch einen zweiten Spalt von dem anderen Polring oder einem mit ihm magnetisch verbundenen Teil, beispielsweise radial verlaufenden Flansch, getrennt ist. Bei dieser Ausführungsform wird der an sich bekannte Spalt radial durchströmt, der erfindungsgemäße Spalt wird in Achsrichtung der Anordnung vom elektromagnetischen Fluß durchsetzt. Dies ermöglicht eine besonders kompakte Bauweise und eine besonders günstige Verteilung der elektromagnetischen und der dauermagnetischen Flüsse.

Die vorgenannte Ausführungsform der Erfindung kann dahingehend weiter ausgebildet sein, daß der Steg mit dem Schenkel am äußeren Polring angeordnet ist, was besondere Vorteile für die Abführung der Wärme bringt, oder aber am inneren Polring vorgesehen ist. Der Steg und der mit ihm verbundene Schenkel ist zweckmäßig einstückig an dem Polring angeformt.

Bei einer Ausführungsform der Erfindung ist an dem dem Arbeitsspalt abgewandten Ende des Magnetgehäuses ein Anbauflansch vorgesehen, der eine Wand des Magnetgehäuses an dieser Seite ersetzt. Dieser Anbauflansch ist magnetisch leitend und auch mechanisch mit einem der beiden Polringe verbunden. Der erfindungsgemäße zweite Spalt ist dann zwischen dem anderen, von dem Anbauflansch magnetisch getrennten Polring und dem Anbauflansch vorgesehen. Diese Teile des Anbauflansches bestehen zweckmäßigerweise ebenfalls aus ferromagnetischem Werkstoff. Der Anbauflansch dient zur Befestigung von mit der einen Brems- oder Kupplungshälfte verbundenen Teilen.

Weitere Merkmale der Erfindung ergeben sich aus der folgenden Beschreibung von Ausführungsformen der Erfindung in Verbindung mit den Ansprüchen und der Zeichnung. Die einzelnen Merkmale können je für sich oder zu mehreren bei Ausführungsformen der Erfindung verwirklicht sein.

In der Zeichnung sind zwei Ausführungsformen der Erfindung dargestellt. Es zeigen :

Fig. 1 eine Ausführungsform der Erfindung in einem axialen Längsschnitt ;

Fig. 2 einen der Fig. 1 entsprechenden Schnitt durch eine geringfügig anders aufgebaute Ausführungsform der Erfindung und

Fig. 3 einen Teil eines Reibringes im Querschnitt in wesentlich größerem Maßstab.

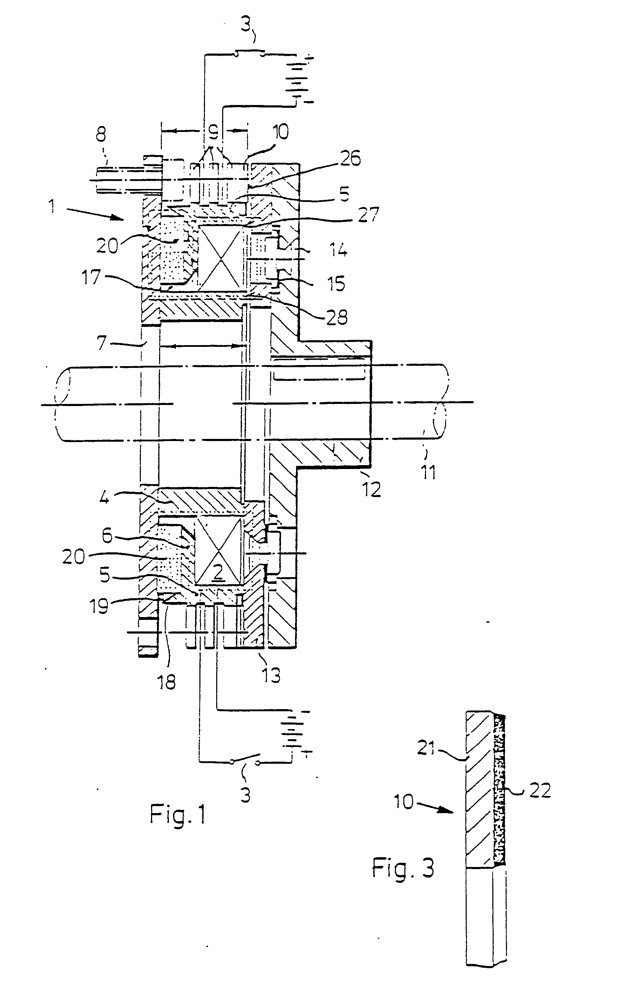

Bei der in Fig. 1 dargestellten Anordnung ist in einem ringförmigen Magnetgehäuse 1 eine Magnetwicklung 2 angeordnet, die mittels eines Schalters 3 erregt werden kann. Das Magnetgehäuse 1 weist einen inneren Polring 4 und einen äußeren Polring 5 auf. Der äußere Polring 5 weist einen radial nach innen gerichteten Innensteg 6 auf. Das Magnetgehäuse 1 kann stationär angeordnet sein und zusammen mit einem Anbauflansch 7 an einem nicht dargestellten Motorgehäuse mittels Schrauben 8 befestigt sein.

Am äußeren Umfang des Magnetgehäuses 1 sind freistehende Kühlrippen 9 aus antimagnetischem Werkstoff angeordnet, von denen eine einen umlaufenden Falz zum Einsetzen und Befestigen eines Reibringes 10 besitzt, der bündig mit den beiden den Arbeitsspalt 26 begrenzenden kreisförmigen Polflächen 27, 28 der beiden Polringe 4 und 5 abschließt.

Auf einer zentralen Welle 11 ist eine Nabe 12 drehfest angeordnet, an der eine Ankerscheibe 13 mittels Nieten 14 und einer Ringfeder 15 axial federnd verschiebbar befestigt ist. Dabei verbindet eine Gruppe der Nieten 14 die Ankerscheibe 13 mit der Ringfeder 15, während eine andere Gruppe der Nieten 14 die Ringfeder 15 mit der Nabe 12 verbindet. Dadurch kann sich die Ringfeder 15 wellenförmig verformen und eine axiale Verschiebung der Ankerscheibe 13 ermöglichen. Die verhältnismäßig schwache Feder 15 ist bestrebt, die Ankerscheibe 13 in einem kleinen Abstand von den Polen 27 und 28 des Ankergehäuses 1 zu halten.

Das Magnetgehäuse 1 ist zweiteilig ausgebildet, zwischen dem inneren Polring 4 und dem äußeren Polring 5 mit dem angeformten schräg auslaufenden Innensteg 6 ist ein Luftspalt 17 vorgesehen, der von dem von der Magnetspule 2 erzeugten elektromagnetischen Fluß in radialer Richtung durchströmt wird. Der äußere Polring 5 weist einen vom Innensteg 6 axial in Richtung auf den Anbauflansch 7 abstehenden Schenkel 18 auf, der vor dem Anbauflansch 7 endet, so daß zwischen diesem und der ebenfalls schrägen Stirnfläche des Schenkels 18 ein Luftspalt 19 entsteht, der in axialer Richtung vom elektromagnetischen Fluß durchströmt wird. Der Anbauflansch 7 ist mechanisch und magnetisch leitend mit dem inneren Polring 4 verbunden.

Zwischen dem Innensteg 6 und dem Anbauflansch 7 ist ein Dauermagnet 20 angeordnet, dessen radiale Innenfläche von dem inneren Polring ebenfalls durch einen Luftspalt getrennt ist, der durch die axiale Verlängerung des Luftspaltes 17 gebildet ist. Der Dauermagnet 20 ist axial magnetisiert, seine eine Polfläche liegt an dem Innensteg 6 des äußeren Polringes 5 an, seine andere Polfläche liegt an einem ferromagnetischen Teil des Anbauflansches 7 an, der magnetisch leitend mit dem inneren Polring 4 verbunden ist.

Der von dem Dauermagneten 20 ausgehende dauermagnetische Fluß ist in Fig. 1 mit punktierten Linien eingezeichnet. Er tritt von der dem Anbauflansch 7 abgewandten Polfläche des Dauermagneten 20 in den radial verlaufenden Innensteg 6 des äußeren Polringes 5 ein und gelangt unmittelbar an die äußere, der Ankerscheibe 13 zugewandte Polfläche 27 des Magnetgehäuses. Der Übertritt dieses Flußzweiges in den inneren Polring 4 ist durch den Spalt 17 verhindert. Der in den dem Anbauflansch 7 zugewandten Polfläche des Dauermagneten 20 eintretende dauermagnetische Fluß verläuft von der inneren der Ankerscheibe zugewandten Polfläche 28 über den inneren Polring 4 zu dem Anbauflansch 7. Dieser Fluß schließt sich über den Lüftungsspalt 26 hinweg über den den Polflächen 27 und 28 gegenüberliegenden Teil der Ankerscheibe 13. Im Falle einer Bremse ist das Magnetgehäuse 1 stationär, da mit dem Anbauflansch 7 weitere stationäre Teile verbunden sind. Ist die Magnetspule 2 nicht erregt, so zieht der dauermagnetische Fluß, wie in Fig. 1 untere Hälfte dargestellt, die Ankerscheibe 13 entgegen der Wirkung der Feder 15 an die Reibfläche 22 des Reibringes 10 und die Polflächen 27 und 28 schleifend an und bremst damit die Welle 11 ab.

Wird die Magnetspule 2 durch Schließen des Schalters 3 erregt, so bildet sich ein Magnetfluß aus, der in der oberen Hälfte der Fig. 1 durch eine gestrichelte Linie dargestellt ist. Dieser elektromagnetische Fluß verläuft in der Achse der ringförmigen Spule 2, also durch den inneren Polring 4 zu dem Pol 28 des Magnetgehäuses, über den Lüftungsspalt 26 in die Ankerscheibe 13 und von dort wieder über den Lüftungsspalt 26 in den äußeren Polring 5. Die elektromagnetischen Feldlinien schließen sich über zwei Flußpfade mit dem in dem inneren Polring 4 verlaufenden Fluß, nämlich einerseits über den zwischen dem Dauermagneten 20 und der Magnetspule 2 angeordneten radialen Innensteg 6 und den Spalt 17, sowie über den anderen Flußpfad, der durch den Schenkel 18, den Luftspalt 19 und den Anbauflansch 7 wieder zum inneren Polring 4 führt. Der elektromagnetische Fluß teilt sich daher in zwei jeweils durch Spalte 19 bzw. 17 definierte Flußpfade auf.

Dadurch kann der Innensteg 6 einen geringeren Flußquerschnitt erhalten, wodurch die erwähnte Verkürzung der axialen Baulänge erzielt wird. Außerdem wird der magnetische Widerstand verringert, da die Flußquerschnitte der beiden Flußpfade größer sind als der Flußquerschnitt des Innensteges 6 für sich allein. Der Anbauflansch 17 kann einen sehr geringen magnetischen Widerstand aufweisen.

Wird die Magnetspule 2 erregt, so überlagert sich der elektromagnetische Fluß in den Polringen 4 und 5, in den Polflächen 27 und 28 und in der Ankerscheibe 13 dem dauermagnetischen Kraftfluß so, daß der letztgenannte kompensiert und verdrängt wird. Dadurch kann die Feder 15 die Ankerscheibe 13 von der Reibfläche 32 abheben, wie dies in der oberen Hälfte der Fig. 1 dargestellt ist. Die Ankerscheibe 13 ist dann von dem stationären Magnetgehäuse 1 durch den Arbeitsspalt 26 getrennt, die Welle 11 kann sich frei drehen.

Sobald der Erregerstrom der Magnetwicklung 2 durch Öffnen des Schalters 3 unterbrochen wird, zieht der dauermagnetische Fluß die Ankerscheibe 13 zur Anlage an den Reibflächen (Reibring 10 und Polflächen 27, 28) und bremst diese ab.

In Fig. 3 ist ein vergrößerter Abschnitt des Reibringes 10 im Querschnitt dargestellt. Er weist einen Träger 21 auf, der mit einer Reibfläche 22 versehen ist, die der Ankerscheibe 13 zugewandt ist. Der Träger 21 und die Reibfläche 22 bestehen aus nicht magnetisierbarem Werkstoff, der Träger 21 beispielsweise aus einer thermisch gut leitenden Legierung mit Beryllium-Kupfer, die Friktionsschicht 22 kann aus einem keramischen Werkstoff hoher Dichte, beispielsweise Aluminiumoxid, bestehen, das im Plasmaaufspritzverfahren aufgetragen ist. Die Werkstoffe des Trägers 21 und der Friktionsschicht 22 sind so aufeinander abgestimmt, daß der thermische Ausdehnungskoeffizient des Reibringes dem des ferromagnetischen Materials des Magnetgehäuses 1 entspricht. Die Werkstoffauswahl ist optimal, wenn bei einer Temperatur über 20 °C als normale Ausgangstemperatur die axiale Länge des inneren Polringes 4 gleich oder größer ist als die axiale Länge des äußeren Polringes 5 zuzüglich des Permanentmagneten.

Bei Ausführungsformen der Erfindung sind die Kühlrippen 9 nicht radial angeordnet, sondern sie verlaufen axial, beispielsweise über den Umfang der Ankerscheibe 13 hinausragend. Dies hat den Vorteil, daß der Zugang zu den Befestigungsschrauben 8 günstiger vorgesehen werden kann. Die axiale Anordnung der Kühlrippen erspart gegenüber dem radialen Verlauf der Kühlrippen einen Teil des Aufwandes bei der Herstellung, wenn man den ganzen Spulenkörper aus einem Sinterteil herstellt.

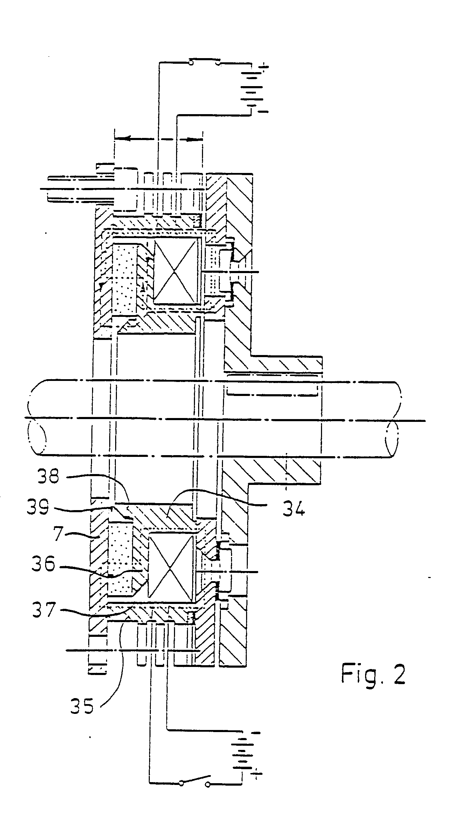

Die in Fig. 2 dargestellte Ausführungsform der Erfindung unterscheidet sich von der in Fig. 1 dargestellten Ausführungsform dadurch, daß ein dem Innensteg 6 entsprechender Innensteg 36 nicht am äußeren Polring 35, sondern am inneren Polring 34 angeordnet ist. Ein dem Luftspalt 19 der Ausführungsform nach Fig. 1 entsprechender Luftspalt 39 ist daher zwischen dem Schenkel 38 des inneren Polrings 34 und dem Anbauflansch 7 vorgesehen, ein dem Luftspalt 17 der Ausführungsform nach Fig. 1 entsprechender Luftspalt 37 befindet sich zwischen dem äußeren Rand des radialen Innensteges 36 und dem äußeren Polring 35.

In den Kühlrippen 9 sind mehrere auf dem Umfang verteilte Ausnehmungen zum Einsetzen der Schrauben 8 angeordnet.

Das Merkmal, daß der Reibring in radialer Richtung nach außen versetzt in einem Falz des Magnetgehäuses und in axialer Richtung bündig mit den Polringen abschließend angeordnet ist trägt dazu bei, daß ein höheres Drehmoment und eine geringere axiale Baulänge erzielt wird, weil der Reibring radial nach außen versetzt um das Magnetgehäuse herum verläuft. Die axiale Verkürzung kann im Vergleich zu den bekannten Reibungsbremsen oder -kupplungen ca. 10-15 % betragen.

Da unter dem Reibring am Außenmantel des Magnetgehäuses Kühlrippen angeordnet sind, von denen eine als Auflage und Befestigungsgrund für den Reibring dient, ergibt sich eine bessere Wärmeableitung, weil der Reibring nicht mehr die Magnetwicklung abdeckt und auf einer freistehenden Kühlrippe des Magnetgehäuses befestigt ist. Insbesondere ergeben sich diese Vorteile durch eine Kombination dieser beiden Merkmale, auch in Kombination mit anderen beanspruchten Merkmalen.

### Patentansprüche

1. Einen Elektromagneten (2) und einen Dauermagneten (20) enthaltende magnetisch betätigte Reibungsbremse oder -kupplung mit einem geteilten ferromagnetischen Magnetgehäuse (1), das einen inneren (4, 34) und einen von ihm durch einen eine Übergangsstelle des elektromagnetischen Flusses definierenden Spalt magnetisch getrennten äußeren Polring (5, 35) aufweist, zwischen denen eine ringförmige Magnetspule (20) angeordnet ist und mit denen je ein Pol des axial magnetisierten Dauermagneten (20) magnetisch leitend verbunden ist, dadurch gekennzeichnet, daß in dem Weg des elektromagnetischen Flusses durch das Magnetgehäuse (1) mindestens zwei in voneinander örtlich verschiedene magnetisch paralelle Flusspfade eingeschaltete Spalte (17, 19) zwischen den Polringen (4, 5 bzw. 34, 35) vorgesehen sind.

2. Bremse oder Kupplung nach Anspruch 1, bei der ein Polring (4, 5 ; 34, 35) einen sich radial erstreckenden Steg (6, 36) aufweist, der durch einen im Weg des elektromagnetischen Flusses liegenden Spalt (17, 37) von dem andern Polring (5, 4 ; 35, 34) getrennt ist, dadurch gekennzeichnet, daß der Steg (6, 36) einen axial verlaufenden Schenkel (18, 38) aufweist, der durch einen zweiten Spalt (19, 39) von dem andern Polring (4, 35) oder einem mit ihm magnetisch verbundenen Teil (7) getrennt ist.

3. Bremse oder Kupplung nach Anspruch 2, dadurch gekennzeichnet, daß der Steg (6) mit dem Schenkel (18) am äußeren Polring (5) angeordnet ist.

4. Bremse oder Kupplung nach Anspruch 2, dadurch gekennzeichnet, daß der Steg (36) mit dem Schenkel (38) an dem inneren Polring (34) angeordnet ist.

5. Bremse oder Kupplung nach einem der Ansprüche 1 bis 4, dadurch gekennzeichnet, daß einer der beiden Polringe (4, 5, 34, 35) mit einem sich über den ganzen Durchmesser des Magnetgehäuses (1) erstreckenden Anbauflansch (7) magnetisch leitend und mechanisch verbunden ist.

6. Bremse oder Kupplung nach Anspruch 6, dadurch gekennzeichnet, daß der Dauermagnet (20) zwischen dem Anbauflansch (7) und dem Steg (6) des Polringes (5, 34) angeordnet ist, der vom Anbauflansch (7) magnetisch getrennt ist.

7. Bremse oder Kupplung nach einem der Ansprüche 1 bis 6, mit einem stationären, ferromagnetischen Magnetgehäuse (1), in dem zwischen einem inneren Polring (4, 34) und einem äußeren Polring (5, 35) eine Magnetwicklung (2) angeordnet ist, einem am Magnetgehäuse (1) befestigten Reibring (10) und einer in axialer Richtung federnd an einer Nabe (12) befestigten und ohne Arbeitsluftspalt arbeitenden Ankerscheibe (13) als Gegenreibelement, die drehfest mit einer Welle (11) verbunden ist, dadurch gekennzeichnet, daß der Reibring (10) in radialer Richtung nach außen versetzt in einem Falz des Magnetgehäuses (1) und in axialer Richtung bündig mit den Polringen (4, 5 ; 34, 35) abschließend angeordnet ist und unter dem Reibring (10) am Außenmantel des Magnetgehäuses (1) Kühlrippen (9) angeordnet sind, von denen eine als Auflage und Befestigungsgrund für den Reibring (10) dient.

8. Bremse oder Kupplung nach den Anspruch 7, dadurch gekennzeichnet, daß der Reibring (10) aus einem antimagnetischen Träger (21) mit einer antimagnetischen Friktionsschicht (22) besteht.

9. Bremse oder Kupplung nach Anspruch 8, dadurch gekennzeichnet, daß der Träger (21) aus einem thermisch gut leitenden Material, beispielsweise Beryllium-Kupfer besteht.

10. Bremse oder Kupplung nach einem der Ansprüche 8 oder 9, dadurch gekennzeichnet, daß die Friktionsschicht (22) aus einem keramischen Material hoher Dichte, beispielsweise Aluminiumoxyd, besteht, welches in Pulverform im Plasma-Aufspritz-Verfahren aufgetragen ist.

11. Reibungsbremse oder Kupplung nach einem der Ansprüche 7 bis 10, dadurch gekennzeichnet, daß die Materialien des Trägers (21) und der Friktionsschicht (22) und deren Dicke so aufeinander abgestimmt sind, daß der thermische Ausdehnungskoeffizient des Reibringes (10) dem des ferromagnetischen Materials des Magnetgehäuses (1) entspricht.

### Claims

1. Magnetically operated friction brake or friction clutch comprising an electromagnet (2) and a permanent magnet (20) and a split ferromagnetic magnet housing (1) having an inner (4, 34) and an outer pole ring (5, 35) which is isolated magnetically from the said inner pole ring (4, 34) by a gap defining a transition point for the electromagnetic flux, the two pole rings comprising between them an annular magnet coil (20) and being connected each, in a magnetically conductive manner, to one pole of the axially magnetized permanent magnet (20), characterized in that at least two gaps (17, 19) connected into locally different, magnetically parallel flux paths are provided between the pole rings (4, 5 or 34, 35) in the path taken by the electromagnetic flux through the magnet housing (1).

2. Brake or clutch according to claim 1, in which a pole ring (4, 5 ; 34, 35) comprises a radially extending web (6, 36) which is isolated from the other pole ring (5, 4 ; 35, 34) by a gap (17, 37) provided in the path of the electromagnetic flux, characterized in that the web (6, 36) exhibits an axially extending leg (18, 38) which is isolated from the other pole ring (4, 35) or a part (7) magnetically connected therewith by a second gap (19, 39).

3. Brake or clutch according to claim 2, characterized in that the web (6) carrying the leg (18) is arranged on the outer pole ring (5).

4. Brake or clutch according to claim 2, characterized in that the web (36) carrying the leg (38) is arranged on the inner pole ring (34).

5. Brake or clutch according to any of claims 1 to 4, characterized in that one of the two pole rings (4, 5, 34, 35) is connected mechanically and in a magnetically conductive manner with a mounting flange (7) extending across the whole diameter of the magnet housing (1).

6. Brake or clutch according to claim 6, characterized in that the permanent magnet (20) is arranged between the mounting flange (7) and the web (6) of the pole ring (5, 34) which is isolated magnetically from the mounting flange (7).

7. Brake or clutch according to any of claims 1 to 6, having a stationary ferromagnetic magnet housing (1) comprising a magnet winding (2) arranged between an inner pole ring (4, 34) and an outer pole ring (5, 35), further a friction ring (10) fixed on the magnet housing (1) and a core disc (13) serving as a counter-friction element, which is fixed on a hub (12) in an axially resilient manner, which operates without a working air gap and which is connected with a shaft (12) to rotate therewith, characterized in that the friction ring (10) is seated in a groove in the magnet housing (1) so that it is offset outwardly in the radial direction and ends flush with the pole rings (4, 5 ; 34, 35) in the axial direction, and that cooling ribs (9) are provided on the outer jacket of the magnet housing (1) underneath the friction ring (10), one of the said cooling ribs (9) serving as a support and mounting base for the friction ring (10).

8. Brake or clutch according to claim 7, characterized in that the friction ring (10) consists of an antimagnetic carrier (21) provided with an antimagnetic friction coating (22).

9. Brake or clutch according to claim 8, characterized in that the carrier (21) consists of a thermally highly conductive material, for example of beryllium copper.

10. Brake or clutch according to claim 8 or 9, characterized in that the friction coating (22) consists of a ceramic material of high density, for example aluminium oxide, applied in the form of powder by the plasma spray process.

11. Friction brake or clutch according to any of claims 7 to 10, characterized in that the materials of the carrier (21) and of the friction coating (22), and their thicknesses, are adapted to each other in such a manner that the coefficient of thermal expansion of the friction ring (10) corresponds to that of the ferromagnetic material of the magnet housing (1).

**Revendications**

1. Frein ou embrayage à friction magnétique contenant un électro-aimant (2) et un aimant permanent (20), avec un boîtier d'aimant ferromagnétique compartimenté (1), qui présente un anneau polaire interne (4, 34) et un anneau polaire externe (5, 35) séparé magnétiquement de lui par un entrefer définissant un lieu de passage du courant électro-magnétique, anneaux entre lesquels est disposée une bobine magnétique annulaire (20) et avec chacun desquels est relié, de manière magnétoconductrice, un pôle de l'aimant permanent (20) à magnétisation axiale, caractérisé en ce que, sur le trajet du courant électro-magnétique au travers du boîtier d'aimant (1), sont prévus, entre les anneaux polaires (4, 5) ou (34, 35), au moins deux entrefers (17, 19) connectés selon deux courants magnétiques parallèles distincts l'un de l'autre dans l'espace.

2. Frein ou embrayage à friction selon la revendication 1, dans lequel un anneau polaire (4, 5 ; 34, 35) présente une tige radiale (6, 36), qui est séparé de l'autre anneau polaire (5, 4 ; 35, 34) par un entrefer (17, 37) situé sur le trajet du courant électromagnétique, caractérisé en ce que la tige (6, 36) présente une aile axiale (18, 38), qui est séparée, par un second entrefer, de l'autre anneau polaire (4, 35) ou d'une partie reliée à lui magnétiquement.

3. Frein ou embrayage à friction selon la revendication 2, caractérisé en ce que la tige (6) est disposée avec l'aile (18) sur l'anneau polaire extérieur (5).

4. Frein ou embrayage à friction selon la revendication 2, caractérisé en ce que la tige (36) est disposée avec l'aile (38) sur l'anneau polaire intérieur (34).

5. Frein ou embrayage à friction selon l'une des revendications 1 à 4, caractérisé en ce que l'un des deux anneaux polaires (4, 5 ; 34, 35) est relié magnétiquement et mécaniquement par un flan rapporté (7) s'étendant sur tout le diamètre du boîtier d'aimant (1).

6. Frein ou embrayage à friction, selon la revendication 5, caractérisé en ce que l'aimant permanent (20) est disposé entre le flan rapporté (7) et la tige (6) de l'anneau polaire (5, 34), qui est séparé magnétiquement du flan rapporté (7).

7. Frein ou embrayage à friction selon l'une des revendications 1 à 6, avec un boîtier d'aimant ferromagnétique stationnaire (1), dans lequel est disposé un enroulement électromagnétique (2), entre un anneau polaire intérieur (4, 34) et un anneau polaire extérieur (5, 35), avec un anneau de friction (10) fixé au boîtier d'aimant (1) et un disque d'induit (13), fixé axialement et de manière élastique sur un moyeu (12) et travaillant sans jeu de coussinet comme contre élément de friction, disque d'induit qui est fixé à un axe (11), caractérisé en ce que l'anneau de friction (10) se déplace radialement vers l'extérieur dans une rainure du boîtier d'aimant (1) et est disposé axialement solidairement et dans le même plan avec les anneaux polaires (4, 5 ; 34, 35) et que, sous l'anneau de friction (10), sur l'enveloppe extérieure du boîtier d'aimant (1) sont disposés des anneaux de refroidissement (9), dont l'un sert de support et de base de fixation pour l'anneau de friction (10).

8. Frein ou embrayage à friction selon la revendication 7, caractérisé en ce que l'anneau de friction (10) se compose d'un support antimagnétique (21) avec une couche de friction anti- magnétique (22).

9. Frein ou embrayage à friction selon la revendication 8, caractérisé en ce que le support (21) se compose d'un matériau bon conducteur thermique, par exemple du cuivre-béryllium.

10. Frein ou embrayage à friction selon l'une des revendications 8 et 9, caractérisé en ce que la couche de friction (22) se compose d'un matériau céramique de haute densité, par exemple de l'oxyde d'aluminium, qui est apporté sous forme de poudre selon un procédé d'application au pistolet à plasma.

11. Frein ou embrayage à friction selon l'une des revendications 7 à 10, caractérisé en ce que les matériaux du support (21) et de la couche de friction (22) et leur épaisseur sont déterminés l'un par rapport à l'autre, de sorte que le coefficient de dilatation thermique de l'anneau de friction (10) correspond à celui du matériau ferromagnétique du boîtier d'aimant (1).

Fig. 1

Fig. 3

Fig. 2

38
39
7
36
37
35
34